(19) Europäisches Patentamt
European Patent Office
Office européen des brevets

(11) **EP 2 936 302 B1**

## (12) FASCICULE DE BREVET EUROPEEN

(45) Date de publication et mention
de la délivrance du brevet:
**08.03.2017 Bulletin 2017/10**

(21) Numéro de dépôt: **13815502.3**

(22) Date de dépôt: **20.12.2013**

(51) Int Cl.:
***G06F 7/58*** *(2006.01)*

(86) Numéro de dépôt international:
**PCT/EP2013/077693**

(87) Numéro de publication internationale:
**WO 2014/096363 (26.06.2014 Gazette 2014/26)**

(54) **GENERATEUR DE SEQUENCES CHAOTIQUES**

GENERATOR FÜR CHAOTISCHE SEQUENZEN

CHAOTIC SEQUENCE GENERATOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.12.2012 FR 1262677**

(43) Date de publication de la demande:
**28.10.2015 Bulletin 2015/44**

(73) Titulaire: **Universite de Nantes
44000 Nantes (FR)**

(72) Inventeurs:
• **EL ASSAD, Safwan
F-44470 Carquefou (FR)**
• **NOURA, Hassan
Beyrouth (LB)**

(74) Mandataire: **Lavoix
2, place d'Estienne d'Orves
75441 Paris Cedex 09 (FR)**

(56) Documents cités:
**FR-A1- 2 958 057      US-A1- 2005 097 153**

• **SHUJUN LI ET AL: "Statistical Properties of
Digital Piecewise Linear Chaotic Maps and Their
Roles in Cryptography and Pseudo-Random
Coding", CRYPTOGRAPHY AND CODING: 8TH
IMA INTERNATIONAL CONFERENCE,
CIRENCESTER, UK, DECEMBER 17 - 19, 2001;
PROCEEDINGS. (IN: LECTURE NOTES IN
COMPUTER SCIENCE), SPRINGER-VERLAG,
HEIDELBERG-BERLIN, DE, vol. 2260, 17
décembre 2001 (2001-12-17), pages 205-221,
XP007917061, ISBN: 978-3-540-43026-1**

**Description**

La présente invention concerne un générateur de séquences chaotiques de valeurs entières et un procédé de génération de séquences chaotiques associé.

Plus particulièrement, l'invention se rapporte au domaine de la sécurité des données partagées, transmises et stockées dans les réseaux de transmission d'informations.

Le transfert des données confidentielles (documents d'entreprise, informations médicales, résultats de recherche, informations personnelles de types photos et vidéos, etc.) dans un environnement ouvert utilisant les canaux usuels de communication (câbles, Internet, Radio-mobiles, satellites,...) doit être réalisé avec une sécurité maximale et un débit suffisant. A cet effet, les crypto-systèmes basés sur les signaux chaotiques sont adéquats pour atteindre les objectifs cités. Un élément déterminant dans tout crypto-système basé chaos est le générateur des séquences chaotiques, qui sert à la génération des clés secrètes et au processus de chiffrement/déchiffrement des données dans les opérations de substitution et de permutation. La confidentialité des données dépendra entre autres du degré du chaos (c'est-à-dire de l'aléatoire) des séquences produites par le générateur des séquences chaotiques utilisé.

Les séquences chaotiques utilisables dans les crypto-systèmes sont caractérisées par des propriétés de longueur de période et de diffusion.

La demande de brevet WO2011/121218 de Safwan El Assad et Hassan Noura, présente un générateur de séquences chaotiques qui permet de générer des séquences chaotiques de longueur très grande, donc de périodicité négligeable, utilisables dans des applications cryptographiques concrètes avec un grand niveau de sécurité.

La présente invention propose un générateur qui améliore la propriété de « confusion-diffusion » des générateurs de séquences chaotiques, tout en ayant une longueur de période suffisamment grande pour une application cryptographique avec une bonne sécurité.

Selon un premier aspect, l'invention concerne un générateur de séquences chaotiques de nombres de valeurs entières représentées sur un nombre de bits prédéterminé, lesdites séquences étant destinées à être utilisées notamment dans des systèmes de cryptage d'informations à base de clé, ledit générateur comportant un nombre m de moyens de mise en oeuvre de fonctions non linéaires. Le générateur comporte, en sortie desdits moyens de mise en oeuvre de fonctions non linéaires, des moyens de combinaison aptes à combiner les sorties desdits moyens de mise en oeuvre de fonctions non linéaires par application d'une matrice de diffusion binaire donnée, permettant d'obtenir un nombre m de sorties, chaque valeur de sortie étant calculée par une combinaison binaire de sorties desdits moyens de mise en oeuvre de fonctions non linéaires.

Avantageusement, le générateur proposé améliore la caractéristique de « confusion-diffusion » des séquences chaotiques générées, tout en préservant une bonne propriété de périodicité. De plus, un générateur selon l'invention est aisé à mettre en oeuvre et permet la génération de séquences chaotiques en un temps de calcul assez rapide comparé aux générateurs standard proposés par le NIST (« National Institute of Standards and Technology »).

Le générateur de séquences chaotiques selon l'invention peut présenter une ou plusieurs des caractéristiques ci-dessous, prises indépendamment ou en combinaison :

- il comporte en outre des moyens de perturbation raccordés en sortie des moyens de combinaison ;
- il comporte m moyens de perturbation, un dit moyen de perturbation étant raccordé à chaque sortie des moyens de combinaison ;
- un dit moyen de perturbation comprend un registre à décalage à réaction ;
- lesdits moyens de mise en oeuvre de fonctions non linéaires comportent des moyens de mise en oeuvre de cartes chaotiques d'un premier type et des moyens de mise en oeuvre de cartes chaotiques d'un deuxième type ;
- les moyens de mise en oeuvre de cartes chaotiques de premier type et les moyens de mise en oeuvre de cartes chaotiques de deuxième type sont alternés ;
- les cartes chaotiques de premier type sont des cartes chaotiques de type « skew tent » et les cartes chaotiques de deuxième type sont des cartes chaotiques cartes chaotiques linéaires par morceaux PWLCM ;
- les nombre d'entrées et de sorties des moyens de combinaison est égal à l'un des nombres suivants : 4, 8, 32, 64.
- les moyens de combinaison comportent, pour l'obtention d'une sortie, un nombre m d'interrupteurs branchés en sortie des moyens de mise en oeuvre de fonctions non linéaires, un interrupteur fermé correspondant à la présence d'un élément égal à un dans la matrice de diffusion binaire et un interrupteur ouvert correspondant à la présence d'un élément égal à zéro dans la matrice de diffusion binaire, les sorties desdits interrupteurs étant raccordées à une porte « ou exclusif ».

Selon un deuxième aspect, l'invention propose un procédé de génération de séquences chaotiques de nombres de valeurs entières représentées sur un nombre de bits prédéterminé, lesdites séquences étant destinées à être utilisées notamment dans des systèmes de cryptage d'informations à base de clé, le procédé étant caractérisé en ce qu'il comporte les étapes de :

- application, de m fonctions non linéaires sur m valeurs initiales données, permettant d'obtenir m valeurs chaotiques,
- combinaison des m valeurs chaotiques par application d'une matrice de diffusion binaire, permettant d'obtenir m valeurs chaotiques combinées et
- application d'une perturbation sur au moins une sous-partie des m valeurs chaotiques combinées.

D'autres caractéristiques et avantages de l'invention ressortiront de la description qui en est donnée ci-dessous, à titre indicatif et nullement limitatif, en référence aux figures annexées, parmi lesquelles :

- la figure 1 est un synoptique d'un générateur de séquences chaotiques selon l'invention ;
- la figure 2 est un synoptique illustrant une mise en oeuvre des moyens de combinaison pour la génération d'une sortie combinée, et
- la figure 3 est un organigramme illustrant les principales étapes d'un mode de réalisation d'un procédé de génération de séquences chaotiques selon l'invention.

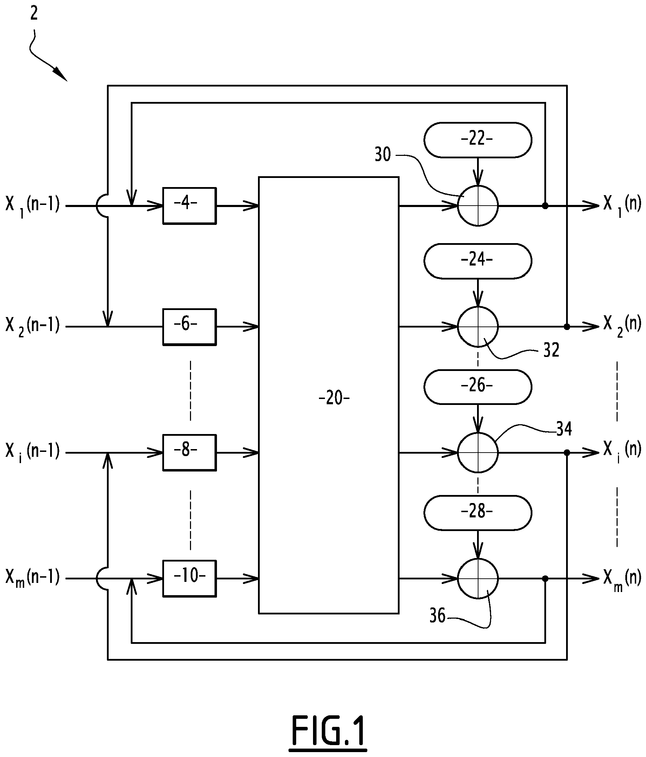

La figure 1 illustre un générateur de séquences chaotiques 2 selon l'invention, permettant de générer m séquences de valeurs entières $X_i(n)$, $1 \leq i \leq m$, où n est un entier et chaque valeur $X_i(n)$ est représentée sur un nombre N de bits prédéterminé, par exemple N=32, ce qui permet d'obtenir une précision finie de calcul, quelque soit la plateforme matérielle sur laquelle le générateur est implémenté. De préférence, N est une puissance de deux. Les m séquences générées sont combinables, si nécessaire, en une seule séquence de nombre chaotiques $S = \{X_1(1),..., X_m(1), X_1(2),..., X_m(2),...X_i(i)...\}$. Les séquences générées sont utilisables dans divers crypto-systèmes utilisant des nombres pseudo-aléatoires, notamment pour des processus de chiffrement/déchiffrement appliquées pour sécuriser des données partagées, transmises et stockées, mais également pour des applications de stéganographie, de tatouage numérique et de génération de clés secrètes.

Le générateur 2 de nombres chaotiques prend en entrée initialement un ensemble de m conditions initiales $X_1(0)$, $X_2(0)$,..., $X_m(0)$, définissant les valeurs initiales ou graines pour n=0.

Le générateur 2 comporte m moyens de mise en oeuvre d'une fonction non-linéaire notés 4, 6, 8, 10. Les moyens de mise en oeuvre d'une fonction non-linéaire comprennent des circuits mettant en oeuvre la fonction $x\log(x)$, ou $x\exp[\cos(x)]$, ou une carte de Chebyshev, ou une carte « skew tent » ou encore une carte chaotique linéaire par morceaux ou PWLCM (« piecewise linear chaotic map »). Les fonctions non-linéaires $F_i()$ associées à chaque entrée $X_i(n)$ sont détaillées ci-dessous dans un mode de réalisation préféré.

De préférence, les moyens de mise en oeuvre de fonctions non linéaires de différents types sont utilisés, afin de maximiser la propriété de diffusion de la séquence chaotique générée.

En particulier, selon un mode de réalisation préféré, les moyens de mise en oeuvre de fonction non-linéaire sont à base de cartes chaotiques de deux types alternées d'une entrée à l'entrée suivante. Il a été constaté qu'une alternance entre des cartes chaotiques « skew tent » de fonction non linéaire $F_1()$ et des cartes chaotiques de type PWLCM de fonction non linéaire $F_2()$ donne de très bons résultats. Sans perte de généralité, la fonction $F_1()$ est appliquée pour les $X_i(n\text{-}1)$ où i est impair, et la fonction $F_2()$ est appliquée pour les $X_i(n\text{-}1)$ où i est pair.

La fonction non linéaire $F_1()$ basée sur une carte chaotique de type « skew tent », appelée carte chaotique de premier type, est la suivante :

$$F_1(X(n-1)) = \begin{cases} \left\lceil \dfrac{2^N \times X(n-1)}{P} \right\rceil & \text{si } 0 \leq X(n-1) \leq P \\[4mm] \left\lfloor 2^N \times \dfrac{2^N - X(n-1)}{2^N - P} \right\rfloor + 1 & \text{si } P < X(n-1) \leq 2^N \end{cases}$$

Où $\lceil Z \rceil$ dénote le plus petit entier supérieur à Z (fonction « ceil »), et $\lfloor Z \rfloor$ dénote le plus grand entier inférieur à Z (fonction « floor »). Le paramètre P est dit paramètre de contrôle discret et il est tel que $0 < P < 2^N$ -1, et N est le nombre de bits sur lequel est représentée une valeur $X(n)$ de la séquence chaotique. Le paramètre P de contrôle est dans ce cas également codé sur N bits.

La fonction non linéaire $F_2()$ basée sur une carte chaotique de type PWLCM discrétisée, appelée carte chaotique de deuxième type, est la suivante :

$$F_2(X(n-1)) = \begin{cases} \left\lfloor 2^N \times \dfrac{X(n-1)}{P} \right\rfloor & \text{si } 0 \le X(n-1) < P \\[2ex] \left\lfloor 2^N \times \dfrac{(X(n-1)-P)}{2^{N-1}-P} \right\rfloor & \text{si } P \le X(n-1) \le 2^{N-1} \\[2ex] F_2(2^N - X(n-1)) & \text{si } X(n-1) \ge 2^{N-1} \end{cases}$$

avec un paramètre de contrôle P tel que $0 < P < 2^{N-1}$. Le paramètre P de contrôle est dans ce cas codé sur N-1 bits.

En variante, une autre alternance des cartes chaotiques de type « skew tent » et de type PWLCM est utilisée.

Ainsi, chaque fonction non linéaire utilisée est définie, dans ce mode de réalisation, par son type et par un paramètre P associé.

Selon encore une autre variante, plus de deux types de cartes chaotiques sont utilisés, par exemple trois ou quatre cartes chaotiques alternées successivement sur les entrées du générateur 2 de séquences chaotiques.

Les sorties $X'_i(n) = F_i(X_i(n\text{-}1))$ après mise en oeuvre des fonctions non-linéaires choisies sont fournies en entrée des moyens de combinaison 20, aptes à appliquer une matrice de diffusion binaire de dimension mxm.

Chaque sortie $Y_i(n)$ des moyens de combinaison 20 est calculée à partir des $X'_j(n)$, $j = 1,...,m$ et de la matrice de diffusion $D_{i,j}$ comme suit : $Y_i(n) = D_{i,j} \otimes X'_j(n)$, $j = 1,...,m$, où le symbole $\otimes$ désigne l'opération de combinaison décrite plus en détail ci-après.

Les sorties des moyens de combinaison 20, en même nombre que les entrées (m) sont perturbées par des moyens de génération de séquences de perturbation notés 22, 24, 26 et 28, qui sont des registres à décalage à réaction (« linear feedback shift register »).

Dans ce mode de réalisation, chaque sortie i des moyens de combinaison 20 est perturbée par addition, au moyen de fonctions « ou exclusif » 30, 32, 34, 36, d'une séquence binaire de perturbation fournie par chaque registre à décalage 22, 24, 26, 28, permettant d'obtenir une valeur chaotique $X_i(n)$.

Les registres à décalage 22, 24, 26, 28 sont aptes à mettre en oeuvre m polynômes primitifs de degrés respectifs $k_i$, $i=1,...,M$. Chaque registre à décalage génère une séquence de perturbation $Q_i(n)$ représentée sur $k_i$ bits.

Chaque registre à décalage est caractérisé par une bonne fonction d'auto-corrélation, une distribution presque uniforme, un cycle de longueur maximale égale à $2^{k_i}-1$ et une implémentation logicielle ou matérielle facile.

En variante, une perturbation est appliquée seulement à un sous-ensemble des sorties $Y_i(n)$ des moyens de combinaison 20.

Les valeurs de sortie $X_i(n)$ sont fournies à nouveau sur les entrées des moyens de mise en oeuvre de fonctions non-linéaires, afin de générer une nouvelle série de m valeurs chaotiques.

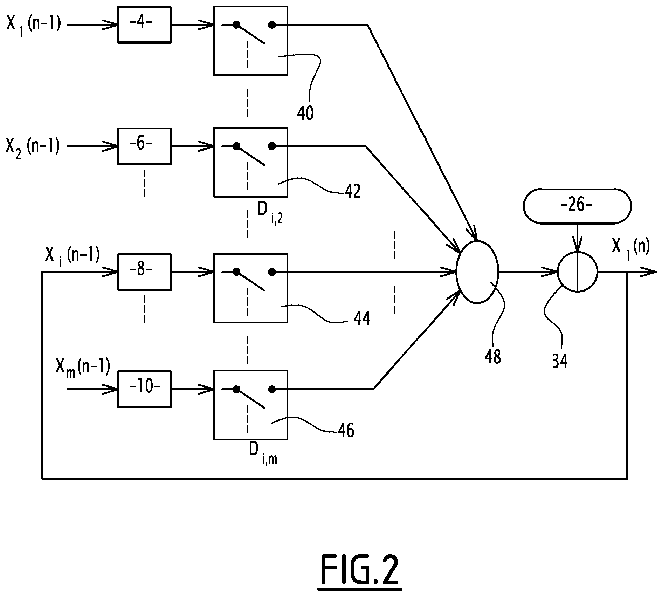

La figure 2 illustre une mise en oeuvre des moyens de combinaison permettant de générer une valeur de sortie $Y_i(n)$. Comme illustré à la figure 2, la génération d'une valeur de sortie $Y_i(n)$ est obtenue potentiellement à partir de l'ensemble des valeurs d'entrée $X_1(n\text{-}1),...,X_m(n\text{-}1)$. Les références des éléments communs avec ceux de la figure 1 sont reprises.

Ainsi, le générateur 2 applique d'abord les moyens de mise en oeuvre de fonctions non-linéaires à chacune des valeurs d'entrée $X_1(n\text{-}1),...,X_m(n\text{-}1)$. Les sorties $X'_i(n)$ sont fournies à des interrupteurs 40, 42, 44, 46, dont la position ouverte ou fermée est fonction de la valeur de la matrice de diffusion binaire mise en oeuvre par les moyens de combinaison 20.

Par exemple, dans le cas où m=4, la matrice de diffusion appliquée est par exemple la matrice suivante :

$$MD4 = \begin{bmatrix} 1 & 1 & 1 & 0 \\ 1 & 1 & 0 & 1 \\ 1 & 0 & 1 & 1 \\ 0 & 1 & 1 & 1 \end{bmatrix}$$

Pour le calcul appliqué à $X'_3(n)$, les interrupteurs 40, 44 et 46 sont fermés, et l'interrupteur 42 est ouvert.

De manière plus générale, la matrice de diffusion MDm de taille mxm étant composée d'éléments $D_{i,j}$, un interrupteur appliqué à la sortie des moyens de mise en oeuvre de la fonction non-linéaire pour l'entrée $X_j(n\text{-}1)$ est ouvert si $D_{i,j}=0$ et fermé si $D_{i,j}=1$. Une sous-partie déterminée par les valeurs $D_{i,j}$ de la matrice de diffusion est combinée par un « ou exclusif » 48 appliqué bit à bit, permettant d'obtenir une valeur combinée $Y_i(n)$ représentée sur N bits.

Ainsi, il apparaît clairement que les moyens de combinaison 20 sont faciles à implémenter par des interrupteurs et des portes « ou exclusif », ce qui permet de générer des calculs rapides.

Ainsi, en sortie, les moyens de combinaison 20 génèrent des valeurs d'échantillons combinées :

$$Y_i(n) = D_{i,j} \otimes X'_j(n), \quad j = 1,...,m$$

Où $D_{i,j}$ est un élément de la matrice de diffusion binaire comme expliqué ci-dessus, $X'_j(n)$ est la sortie des moyens de mise en oeuvre de fonction non linéaire $F_i()$ appliqués, et le symbole $\otimes$ représente l'opération de combinaison.

De préférence, comme illustré dans l'exemple de matrice de diffusion donné ci-dessus pour m=4, la matrice de diffusion MDm est une matrice telle que $MDm^{-1} = MDm$, ce qui facilite l'implémentation de l'opération de déchiffrement dans une application d'un générateur de séquences chaotiques dans un crypto-système à base de clé dynamique.

Dans un mode de réalisation, m=8 et la matrice de diffusion MD8 suivante est de préférence utilisée :

$$MD8 = \begin{bmatrix} 1 & 0 & 1 & 1 & 0 & 1 & 1 & 1 \\ 1 & 1 & 0 & 1 & 1 & 0 & 1 & 1 \\ 1 & 1 & 1 & 0 & 1 & 1 & 0 & 1 \\ 0 & 1 & 1 & 1 & 1 & 1 & 1 & 0 \\ 1 & 1 & 0 & 0 & 0 & 1 & 1 & 1 \\ 0 & 1 & 1 & 0 & 1 & 0 & 1 & 1 \\ 0 & 0 & 1 & 1 & 1 & 1 & 0 & 1 \\ 1 & 0 & 0 & 1 & 1 & 1 & 1 & 0 \end{bmatrix}$$

Dans un autre mode de réalisation, m=16 et la matrice de diffusion MD16 suivante est de préférence utilisée :

$$MD16 = \begin{bmatrix} 0 & 0 & 0 & 1 & 1 & 0 & 1 & 0 & 1 & 1 & 0 & 0 & 0 & 1 & 1 & 0 \\ 0 & 0 & 1 & 0 & 0 & 1 & 0 & 1 & 1 & 1 & 0 & 0 & 1 & 0 & 0 & 1 \\ 0 & 1 & 0 & 0 & 1 & 0 & 1 & 0 & 0 & 0 & 1 & 1 & 1 & 0 & 0 & 1 \\ 1 & 0 & 0 & 0 & 0 & 1 & 0 & 1 & 0 & 0 & 1 & 1 & 0 & 1 & 1 & 0 \\ 1 & 0 & 1 & 0 & 0 & 1 & 0 & 0 & 1 & 0 & 0 & 1 & 0 & 0 & 1 & 1 \\ 0 & 1 & 0 & 1 & 1 & 0 & 0 & 0 & 0 & 1 & 1 & 0 & 0 & 0 & 1 & 1 \\ 1 & 0 & 1 & 0 & 0 & 0 & 0 & 1 & 0 & 1 & 1 & 0 & 1 & 1 & 0 & 0 \\ 0 & 1 & 0 & 1 & 0 & 0 & 1 & 0 & 1 & 0 & 0 & 1 & 1 & 1 & 0 & 0 \\ 1 & 1 & 0 & 0 & 1 & 0 & 0 & 1 & 0 & 0 & 1 & 0 & 0 & 1 & 0 & 1 \\ 1 & 1 & 0 & 0 & 0 & 1 & 1 & 0 & 0 & 0 & 0 & 1 & 1 & 0 & 1 & 0 \\ 0 & 0 & 1 & 1 & 0 & 1 & 1 & 0 & 1 & 0 & 0 & 0 & 0 & 1 & 0 & 1 \\ 0 & 0 & 1 & 1 & 1 & 0 & 0 & 1 & 0 & 1 & 0 & 0 & 1 & 0 & 1 & 0 \\ 0 & 1 & 1 & 0 & 0 & 0 & 1 & 1 & 0 & 1 & 0 & 1 & 1 & 0 & 0 & 0 \\ 1 & 0 & 0 & 1 & 0 & 0 & 1 & 1 & 1 & 0 & 1 & 0 & 0 & 1 & 0 & 0 \\ 1 & 0 & 0 & 1 & 1 & 1 & 0 & 0 & 0 & 1 & 0 & 1 & 0 & 0 & 1 & 0 \\ 0 & 1 & 1 & 0 & 1 & 1 & 0 & 0 & 1 & 0 & 1 & 0 & 0 & 0 & 0 & 1 \end{bmatrix}$$

Il est à noter que pour une application par calcul algorithmique de la matrice de diffusion binaire MD16 ci-dessus, il est possible de réaliser des calculs intermédiaires de termes communs à plusieurs sorties. Ce regroupement permet également de diminuer le nombre de portes « ou exclusif » à mettre en oeuvre dans une implémentation matérielle. Cependant, une implémentation matérielle simple, à base de 96 portes « ou exclusif » est suffisamment rapide pour la mise en oeuvre des moyens de combinaison 20.

Dans un autre mode de réalisation, m=32 et la matrice de diffusion MD32 proposée est construite en appliquant la démarche décrite par Koo et al. dans l'article « On constructing of a 32x32 binary matrix as a diffusion layer for a 256-bit block cipher », publié dans Proceedings ICISC 2006, édition Springer Verlag LNCS 4296, pages 51-64.

Dans cet article, il est proposé de générer une matrice de diffusion pour des applications cryptographiques à partir de l'équation suivante :

$$MD32 = Mod(L_l \times M_m \times L_l^t, 2)$$

Où $L_l^t = L_l$.

Les matrices L et M sont définies comme suit :

$$L_l = \begin{bmatrix} B_{1,1} & B_{1,2} & \cdots & B_{1,8} \\ B_{2,1} & B_{2,2} & \cdots & B_{2,8} \\ \vdots & \vdots & \ddots & \\ B_{8,1} & B_{8,2} & \cdots & B_{8,8} \end{bmatrix} \text{ où } B_{i,j} = \begin{cases} I_{4x4} & \text{si } h_{i,j} = 1 \\ O_{4x4} & \text{si } h_{i,j} = 0 \end{cases}, h_{i,j} \in H_l$$

Avec $I_{4x4}$ la matrice identité de taille 4x4, $O_{4x4}$ la matrice zéro de taille 4x4, et :

$$H_l = \begin{bmatrix} 1 & 1 & 1 & 1 & 1 & 1 & 1 & 0 \\ 1 & 0 & 1 & 1 & 1 & 1 & 1 & 1 \\ 1 & 1 & 0 & 1 & 1 & 1 & 1 & 1 \\ 0 & 1 & 1 & 1 & 1 & 1 & 1 & 1 \\ 1 & 1 & 1 & 1 & 1 & 1 & 0 & 1 \\ 1 & 1 & 1 & 1 & 1 & 0 & 1 & 1 \\ 1 & 1 & 1 & 1 & 0 & 1 & 1 & 1 \\ 1 & 1 & 1 & 0 & 1 & 1 & 1 & 1 \end{bmatrix}$$

La matrice $M_m$ entrant dans la construction de la matrice de diffusion binaire est :

$$M_m = \begin{bmatrix} H_{m1} & O_{8x8} & O_{8x8} & O_{8x8} \\ O_{8x8} & H_{m2} & O_{8x8} & O_{8x8} \\ O_{8x8} & O_{8x8} & H_{m3} & O_{8x8} \\ O_{8x8} & O_{8x8} & O_{8x8} & H_{m4} \end{bmatrix}$$

Où $O_{8x8}$ est la matrice zéro de taille 8x8 (matrice ne contenant que des 0) et les matrices $H_{m1}$ à $H_{m4}$ sont les suivantes :

$$H_{m1} = \begin{bmatrix} 0 & 1 & 1 & 1 & 1 & 1 & 1 & 1 \\ 1 & 0 & 1 & 1 & 1 & 1 & 1 & 1 \\ 1 & 1 & 0 & 1 & 1 & 1 & 1 & 1 \\ 1 & 1 & 1 & 0 & 1 & 1 & 1 & 1 \\ 1 & 1 & 1 & 1 & 0 & 1 & 1 & 1 \\ 1 & 1 & 1 & 1 & 1 & 0 & 1 & 1 \\ 1 & 1 & 1 & 1 & 1 & 1 & 0 & 1 \\ 1 & 1 & 1 & 1 & 1 & 1 & 1 & 0 \end{bmatrix} ; H_{m2} = \begin{bmatrix} 1 & 0 & 1 & 1 & 0 & 0 & 0 & 0 \\ 0 & 1 & 1 & 1 & 0 & 0 & 0 & 0 \\ 1 & 1 & 1 & 0 & 0 & 0 & 0 & 0 \\ 1 & 1 & 0 & 1 & 0 & 0 & 0 & 0 \\ 0 & 0 & 0 & 0 & 1 & 0 & 1 & 1 \\ 0 & 0 & 0 & 0 & 0 & 1 & 1 & 1 \\ 0 & 0 & 0 & 0 & 1 & 1 & 1 & 1 \\ 0 & 0 & 0 & 0 & 1 & 1 & 0 & 1 \end{bmatrix}$$

$$H_{m3} = \begin{bmatrix} 1 & 1 & 0 & 1 & 0 & 0 & 0 & 0 \\ 1 & 1 & 1 & 0 & 0 & 0 & 0 & 0 \\ 0 & 1 & 1 & 1 & 0 & 0 & 0 & 0 \\ 1 & 0 & 1 & 1 & 0 & 0 & 0 & 0 \\ 0 & 0 & 0 & 0 & 1 & 1 & 0 & 1 \\ 0 & 0 & 0 & 0 & 1 & 1 & 1 & 0 \\ 0 & 0 & 0 & 0 & 0 & 1 & 1 & 1 \\ 0 & 0 & 0 & 0 & 1 & 0 & 1 & 1 \end{bmatrix} ; H_{m4} = \begin{bmatrix} 1 & 1 & 1 & 1 & 1 & 1 & 1 & 0 \\ 1 & 1 & 1 & 1 & 1 & 1 & 0 & 1 \\ 1 & 1 & 1 & 1 & 1 & 0 & 1 & 1 \\ 1 & 1 & 1 & 1 & 0 & 1 & 1 & 1 \\ 1 & 1 & 1 & 0 & 1 & 1 & 1 & 1 \\ 1 & 1 & 0 & 1 & 1 & 1 & 1 & 1 \\ 1 & 0 & 1 & 1 & 1 & 1 & 1 & 1 \\ 0 & 1 & 1 & 1 & 1 & 1 & 1 & 1 \end{bmatrix}$$

Comme déjà expliqué ci-dessus, quelque soit le choix de m parmi les valeurs 4, 8, 16, 32, les m sorties des moyens de combinaison 20 sont perturbées via des séquences de perturbation générées par des registres à décalage. Un registre à décalage 26 est représenté sur la figure 2. La séquence de perturbation est appliquée à la sortie $Y_i(n)$ par la porte « ou exclusif » 34.

Les sorties $Y_i(n)$ pour i=1,...,m sont perturbées à l'instant initial et tous les $\Delta_i$, où $\Delta_i$ est la valeur de l'orbite chaotique sans perturbation. La mesure de l'orbite chaotique est effectuée de préférence selon la technique décrite dans la demande de brevet WO2011/121218.

Alternativement, d'autres techniques connues de mesure d'orbite chaotique peuvent être utilisées.

La perturbation appliquée peut donc s'écrire comme suit, pour chaque i, de 1 à m :

$$X_i(n) = \begin{cases} Y_i(n) & \text{si } \mathrm{mod}(n, \Delta_i) \neq 0 \\ Y_i(n) \oplus \mathrm{mod}\left( Q_i\left( \dfrac{n}{\Delta_i} + 1 \right), 2^{k_i} \right) & \text{si } \mathrm{mod}(n, \Delta_i) = 0 \end{cases}$$

Où le symbole $\oplus$ représente l'opération « ou exclusif ».

L'équation ci-dessus montre que la perturbation est appliquée sur les $k_i$ derniers bits de poids faibles de $Y_i(n)$ aux instants $n = l \times \Delta_i$, $l = 0,1,.....$

Pour la valeur m=32, les polynômes $g_i$ suivants sont mis en oeuvre, un polynôme $g_i$ étant mis en oeuvre par le registre à décalage mis en oeuvre pour perturber la séquence $Y_i(n)$ :

$$g_1(x) = x^{15} + x^{13} + x^{10} + x^1 + 1$$

$$g_2(x) = x^{17} + x^3 + x^2 + x^1 + 1$$

$$g_3(x) = x^{19} + x^5 + x^2 + x^1 + 1$$

$$g_4(x) = x^{23} + x^{12} + x^5 + x^4 + 1$$

$$g_5(x) = x^{21} + x^2 + 1$$

$$g_6(x) = x^{17} + x^7 + x^4 + x^3 + 1$$

$$g_7(x) = x^{15} + x^9 + x^4 + x^1 + 1$$

$$g_8(x) = x^{19} + x^9 + x^8 + x^7 + x^6 + x^3 + 1$$

$$g_9(x) = x^{21} + x^{14} + x^7 + x^2 + 1$$

$$g_{10}(x) = x^{15} + x^7 + x^4 + x^1 + 1$$

$$g_{11}(x) = x^{17} + x^{16} + x^3 + x^1 + 1$$

$$g_{12}(x) = x^{21} + x^{13} + x^5 + x^2 + 1$$

$$g_{13} = x^{15} + x^{14} + x^{12} + x^2 + 1$$

$$g_{14} = x^{15} + x^{13} + x^{10} + x^9 + 1$$

$$g_{15} = x^{23} + x^5 + x^4 + x^1 + 1$$

$$g_{16} = x^{17} + x^{12} + x^6 + x^3 + x^2 + x + 1$$

$$g_{17} = x^{15} + x^{13} + x^9 + x^6 + 1$$

$$g_{18} = x^{21} + x^{14} + x^7 + x^6 + x^3 + x^2 + 1$$

$$g_{19} = x^{21} + x^{10} + x^6 + x^4 + x^3 + x^2 + 1$$

$$g_{20} = x^{23} + x^{17} + x^{11} + x^5 + 1$$

$$g_{21} = x^{15} + x^{14} + x^9 + x^2 + 1$$

$$g_{22} = x^{17} + x^9 + x^8 + x^6 + x^4 + x^1 + 1$$

$$g_{23} = x^{15} + x^{13} + x^{12} + x^{10} + 1$$

$$g_{24} = x^{21} + x^8 + x^7 + x^4 + x^3 + x^2 + 1$$

$$g_{25} = x^{15} + x^{12} + x^3 + x^1 + 1$$

$$g_{26} = x^{17} + x^8 + x^7 + x^6 + x^4 + x^3 + 1$$

$$g_{27} = x^{19} + x^{13} + x^8 + x^5 + x^4 + x^3 + 1$$

$$g_{28} = x^{15} + x^{13} + x^7 + x^4 + 1$$

$$g_{29} = x^{21} + x^{14} + x^{12} + x^7 + x^6 + x^4 + x^3 + x^2 + 1$$

$$g_{30} = x^{19} + x^{12} + x^{10} + x^9 + x^7 + x^3 + 1$$

$$g_{31} = x^{17} + x^{16} + x^{14} + x^{10} + x^3 + x^2 + 1$$

$$g_{32} = x^{15} + x^1 + 1$$

Dans les cas où m=4,8 ou 16, un nombre m de polynômes primitifs est sélectionné dans la liste ci-dessus, cette sélection pouvant être effectuée de façon arbitraire.

Selon une variante non représentée, afin d'améliorer encore les performances du générateur chaotique selon l'invention, il est possible d'appliquer la technique dite de sous échantillonnage, qui consiste à itérer l'application des moyens de mise en oeuvre de fonction non linéaire s fois, avec s un entier positif supérieur à 3. Néanmoins, le temps calculatoire est augmenté si cette variante est appliquée.

Le générateur de séquences chaotiques, décrit ci-dessus selon différents modes de réalisation, permet de générer des séquences chaotiques ayant de bonnes performances cryptographiques, notamment des probabilités de bits égaux à 0 et 1 très proches de 0,5 pour toutes les sorties $X_i(n)$, $i = 1,...,m$.

Comme expliqué ci-dessus, dans le mode de réalisation préféré, une alternance des types cartes chaotiques définissant les fonctions non linéaires mises en oeuvre par les moyens de mise en oeuvre de fonctions est appliquée.

Ainsi, un générateur 2 de séquence chaotiques est entièrement défini par une clé secrète qui comporte : m conditions initiales sur N bits, m/2xN bits pour représenter les paramètres des cartes chaotiques de premier type, m/2x(N-1) bits pour représenter les paramètres des cartes chaotiques de deuxième type, m conditions initiales de registres à décalage ce qui correspond à minimum mx15bits.

Ainsi, pour ce mode de réalisation, les tailles de clé secrète sont les suivantes : $TK_4$=314 bits pour m=4, $TK_8$=628 bits pour m=8, $TK_{16}$=1256 bits pour m=16 et $TK_{32}$=2512 bits pour m=32.

Comme on peut le constater, les tailles de clés sont grandes, même pour un nombre d'entrées égal à 4.

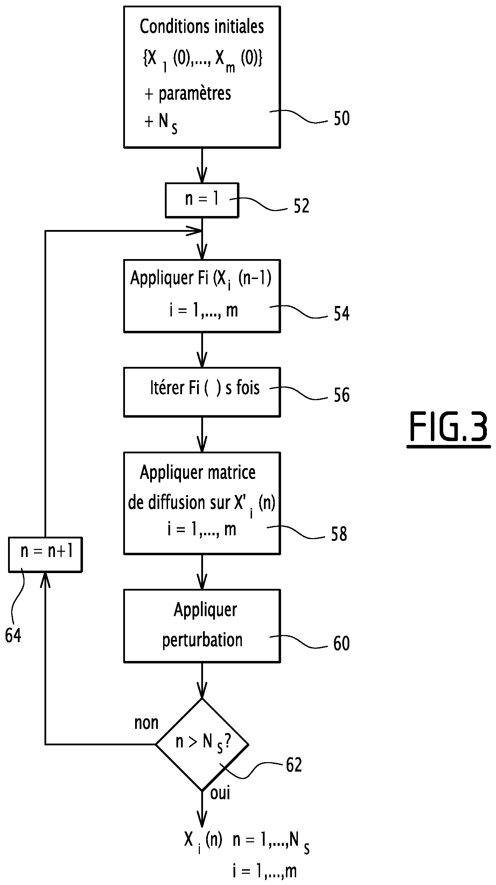

La figure 3 illustre les principales étapes d'un procédé de génération de séquences chaotiques de valeurs entières selon un mode de réalisation de l'invention. Un tel procédé peut être implémenté par un code logiciel, exécuté par une unité central d'un processeur, par exemple d'un ordinateur.

En entrée 50 du procédé sont fournies les m conditions initiales, qui sont les valeurs initiales $X_1(0),...,X_m(0)$,

chaque valeur étant codée sur N bits. De plus, les paramètres permettant de définir les fonctions non linéaires et les perturbations à appliquer sont également fournis en entrée du procédé, ainsi que le nombre Ns d'échantillons à générer pour chacune des m sorties. Par exemple, une clé secrète de format déterminé contient toutes les conditions initiales et tous les paramètres dans un ordre prédéfini.

Une première étape d'initialisation 52 consiste à initialiser une variable n entière à 1. Ensuite, une fonction non linéaire Fi() est appliquée à $X_i(n-1)$ à l'étape 54 de génération de nombres chaotiques, pour i=1,...,m. Comme expliqué ci-dessus, les fonctions non linéaires sont de différents types selon les indices i, par exemple une fonction de premier type pour les indices impairs et une fonction de deuxième type pour les indices pairs. De manière optionnelle, chaque étape de génération 54 est itérée un nombre s de fois à l'étape 56.

Un ensemble de m valeurs chaotiques $\{X'_1(n),..., X'_m(n)\}$ est obtenu à l'issue de l'étape 56 lorsque toutes les valeurs $X_1(n-1)$ ont été traitées.

Ensuite, une étape 58 d'application de matrice de diffusion binaire est mise en oeuvre. Une matrice de diffusion binaire de taille mxm est mémorisée, et l'application de la matrice consiste en une multiplication suivie de l'application d'une opération « ou exclusif » bit à bit, pour chaque i de i=1 à m, comme expliqué ci-dessus en référence à la figure 2.

Un ensemble de valeurs chaotiques combinées $\{Y_1(n),..., Y_m(n)\}$ est obtenu à l'issue de cette étape.

Ensuite, une perturbation telle que décrite ci-dessus est appliquée à l'étape 60 sur chaque $Y_j(n)$ pour obtenir une valeur $X_j(n)$, pour j=1,...,m, et les valeurs $X_i(n)$ obtenues sont mémorisées.

Ensuite il est vérifié à l'étape de test 62 si n est inférieur à Ns, qui est le nombre total d'échantillons à générer par séquence, à l'étape 62. Si n est inférieur à Ns, l'étape 62 est suivie de l'étape 64 d'incrémentation de n, suivie de l'étape 54 déjà décrite.

Si n est supérieur à Ns, le procédé prend fin, les séquences chaotiques $\{X_i(m)\}$ pour i=1,..., m et n=1,...Ns étant fournies en sortie de ce procédé.

Il est à noter qu'en variante, la technique de perturbation n'est appliquée qu'à un sous-ensemble des valeurs chaotiques combinées $Y_j(n)$.

Les inventeurs ont mis en oeuvre divers tests définis par le NIST, dits tests de NIST, permettant de mesurer les propriétés de confusion-diffusion des séquences chaotiques générées, et ont pu montrer de très bonnes propriétés. En particulier, les probabilités des valeurs 0 et 1 mesurées sur 10000 échantillons générés sont très proches de 0,5, donc la distribution est quasi uniforme et l'inter-corrélation des séquences générées est très faible.

Le tableau 1 ci-dessous illustre la corrélation $\rho(X_i, X_j)$ calculée pour Ns=10000 échantillons, pour m=4 :

Tableau 1

| Indices(i,j) | 1 | 2 | 3 | 4 |
|---|---|---|---|---|
| 1 | 1 | 0,00271649 | -0,0020199 | -0,01118557 |
| 2 | 0,00271649 | 1 | -0,01352033 | -0,00860343 |
| 3 | -0,0020199 | -0,01352033 | 1 | 0,0083838 |
| 4 | -0,01118557 | -0,00860343 | 0,0083838 | 1 |

Le tableau 2 illustre les probabilités d'avoir des bits égaux à « 0 » et à « 1 », notées respectivement Pr_0 et Pr_1, dans une séquence chaotique de Ns=10000 échantillons, pour m=4 :

Tableau 2

| | Pr_0 | Pr_1 |
|---|---|---|
| $X_1$ | 0,50049688 | 0,49950313 |
| $X_2$ | 0,50073125 | 0,49926875 |
| $X_3$ | 0,49981875 | 0,50018125 |
| $X_4$ | 0,50096250 | 0,4990375 |

Pour montrer la sensibilité à la clé secrète, le test suivant a été effectué. Pour chaque entrée d'indice i, la conditions initiale $X_i(0)$ a été modifiée par changement du bit de poids faible : $X_i^*(0) = X_i(0) \oplus 1$, et les sorties respectives $X_i^*(n)$ ont été générées, pour tous les i allant de 1 à m. Ensuite, la corrélation $\rho(X_i, X_i^*)$ a été calculée,

ainsi que la distance de Hamming PDH entre les séquences $X_i(n)$ et $X_i^*(n)$ :

$$PDH(X_i, X_i^*) = \frac{\sum_{l=1}^{Nsx2^N} X_i(l) \oplus X_i^*(l)}{Ns \times 2^N} \times \%$$

Où Ns est le nombre d'échantillons testés. Ns=10000 pour les résultats donnés dans le tableau 3 ci-dessous, et m=4. La distance de Hamming est exprimée en pourcentage.

Tableau 3

|       | PDH        | $\rho$       |
|-------|------------|------------|
| $X_1$ | 50,0846875 | 0,00085691 |
| $X_2$ | 50,0190625 | 0,01004383 |
| $X_3$ | 49,971875  | -0,00973299 |
| $X_4$ | 49,9796875 | -0,0053712 |

Comme on peut le constater à partir des tableaux 1 à 3, de très bons résultats sont obtenus avec m=4. Des résultats encore améliorés ont été obtenus pour les valeurs supérieures de m, à savoir m=8, 16 et 32.

Ainsi, le générateur de séquences chaotiques selon l'invention permet d'obtenir des séquences chaotiques avec de très bonnes performances cryptographiques de confusion-diffusion, protégées par des clés secrètes de plus de 300 bits, qui trouvent des applications dans tous les domaines nécessitant des séquences de nombres pseudo-aléatoires : chiffrement par bloc et par flux, stéganographie, tatouage numérique robuste et génération de clés secrètes.

**Revendications**

1.  Générateur (2) de séquences chaotiques de nombres de valeurs entières représentées sur un nombre de bits prédéterminé, lesdites séquences étant destinées à être utilisées notamment dans des systèmes de cryptage d'informations à base de clé, ledit générateur comportant un nombre m de moyens (4, 6, 8, 10) de mise en oeuvre de fonctions non linéaires, **caractérisé en ce qu'**il comporte, en sortie desdits moyens (4, 6, 8, 10) de mise en oeuvre de fonctions non linéaires, des moyens de combinaison (20) aptes à combiner les sorties desdits moyens (4, 6, 8, 10) de mise en oeuvre de fonctions non linéaires par application d'une matrice de diffusion binaire donnée, permettant d'obtenir un nombre m de sorties, chaque valeur de sortie étant calculée par une combinaison binaire de sorties desdits moyens (4, 6, 8, 10) de mise en oeuvre de fonctions non linéaires, les valeurs de sortie étant à nouveau fournies en entrée des moyens de mise en oeuvre de fonctions non linéaires.

2.  Générateur de séquences chaotiques selon la revendication 1, **caractérisé en ce qu'**il comporte en outre des moyens (22, 24, 26, 28) de perturbation raccordés en sortie des moyens de combinaison (20).

3.  Générateur de séquences chaotiques selon la revendication 2, **caractérisé en ce qu'**il comporte m moyens (22, 24, 26, 28) de perturbation, un dit moyen de perturbation étant raccordé à chaque sortie des moyens de combinaison (20).

4.  Générateur de séquences chaotiques selon l'une des revendications 2 ou 3, **caractérisé en ce qu'**un dit moyen (22, 24, 26, 28) de perturbation comprend un registre à décalage à réaction.

5.  Générateur de séquences chaotiques selon l'une des revendications 1 à 4, **caractérisé en ce que** lesdits moyens (4, 6, 8, 10) de mise en oeuvre de fonctions non linéaires comportent des moyens de mise en oeuvre de cartes chaotiques d'un premier type et des moyens de mise en oeuvre de cartes chaotiques d'un deuxième type.

6.  Générateur de séquences chaotiques selon la revendication 5, **caractérisé en ce que** les moyens de mise en oeuvre de cartes chaotiques de premier type et les moyens de mise en oeuvre de cartes chaotiques de deuxième type sont alternés.

**7.** Générateur de séquences chaotiques selon l'une des revendications 5 ou 6, **caractérisé en ce que** les cartes chaotiques de premier type sont des cartes chaotiques de type « skew tent » et les cartes chaotiques de deuxième type sont des cartes chaotiques cartes chaotiques linéaires par morceaux PWLCM.

**8.** Générateur de séquences chaotiques selon l'une des revendications précédentes, **caractérisé en ce que** les nombre d'entrées et de sorties des moyens de combinaison est égal à l'un des nombres suivants : 4, 8, 32, 64.

**9.** Générateur de séquences chaotiques selon l'une des revendications précédentes, **caractérisé en ce que** les moyens de combinaison (20) comportent, pour l'obtention d'une sortie, un nombre m d'interrupteurs (40, 42, 44, 46) branchés en sortie des moyens (4, 6, 8, 10) de mise en oeuvre de fonctions non linéaires, un interrupteur fermé correspondant à la présence d'un élément égal à un dans la matrice de diffusion binaire et un interrupteur ouvert correspondant à la présence d'un élément égal à zéro dans la matrice de diffusion binaire, les sorties desdits interrupteurs étant raccordées à une porte « ou exclusif » (48).

**10.** Procédé de génération de séquences chaotiques de nombres de valeurs entières représentées sur un nombre de bits prédéterminé, mis en oeuvre par un générateur de séquences chaotiques selon la revendication 1, lesdites séquences étant destinées à être utilisées notamment dans des systèmes de cryptage d'informations à base de clé, le procédé étant **caractérisé en ce qu'**il comporte les étapes de :

- application (54), de m fonctions non linéaires sur m valeurs initiales données, permettant d'obtenir m valeurs chaotiques,
- combinaison (62) des m valeurs chaotiques par application d'une matrice de diffusion binaire, permettant d'obtenir m valeurs chaotiques combinées, les valeurs chaotiques combinées étant à nouveau fournies comme valeurs initiales dans l'étape d'application (54).

**11.** Procédé de génération de séquences chaotiques selon la revendication 10, **caractérisé en ce qu'**il comporte en outre une étape d'application (66) d'une perturbation sur au moins une sous-partie des m valeurs chaotiques combinées.

**Patentansprüche**

**1.** Generator (2) chaotischer Sequenzen in Ganzzahlwerten, dargestellt auf einer vorbestimmten Anzahl von Bits, wobei die Sequenzen bestimmt sind, insbesondere in Systemen zur Verschlüsselung von Informationen auf Schlüsselbasis verwendet zu werden, wobei der Generator eine Anzahl m von Mitteln (4, 6, 8, 10) zur Umsetzung nichtlinearer Funktionen aufweist, **dadurch gekennzeichnet, dass** er am Ausgang der Mittel (4, 6, 8, 10) zur Umsetzung nichtlinearer Funktionen Kombinationsmittel (20) aufweist, die imstande sind, die Ausgänge der Mittel (4, 6, 8, 10) zur Umsetzung nichtlinearer Funktionen durch Anwendung einer bestimmten binären Diffusionsmatrix zu kombinieren, die es erlaubt, eine Anzahl m von Ausgängen zu erhalten, wobei jeder Ausgangswert von einer binären Kombination von Ausgängen der Mittel (4, 6, 8, 10) zur Umsetzung nichtlinearer Funktionen berechnet ist, wobei die Ausgangswerte am Eingang der Mittel zur Umsetzung nichtlinearer Funktionen erneut bereitgestellt werden.

**2.** Generator chaotischer Sequenzen nach Anspruch 1, **dadurch gekennzeichnet, dass** er ferner Störmittel (22, 24, 26, 28) aufweist, die an den Ausgang der Kombinationsmittel (20) angeschlossen sind.

**3.** Generator chaotischer Sequenzen nach Anspruch 2, **dadurch gekennzeichnet, dass** er m Störmittel (22, 24, 26, 28) aufweist, wobei ein Störmittel an jeden Ausgang der Kombinationsmittel (20) angeschlossen ist.

**4.** Generator chaotischer Sequenzen nach einem der Ansprüche 2 oder 3, **dadurch gekennzeichnet, dass** ein Störmittel (22, 24, 26, 28) ein Reaktions-Schieberegister umfasst.

**5.** Generator chaotischer Sequenzen nach einem der Ansprüche 1 bis 4, **dadurch gekennzeichnet, dass** die Mittel (4, 6, 8, 10) zur Umsetzung nichtlinearer Funktionen Mittel zur Umsetzung chaotischer Karten eines ersten Typs und Mittel zur Umsetzung chaotischer Karten eines zweiten Typs aufweisen.

**6.** Generator chaotischer Sequenzen nach Anspruch 5, **dadurch gekennzeichnet, dass** die Mittel zur Umsetzung chaotischer Karten ersten Typs und die Mittel zur Umsetzung chaotischer Karten zweiten Typs alternieren.

7. Generator chaotischer Sequenzen nach einem der Ansprüche 5 oder 6, **dadurch gekennzeichnet, dass** die chaotischen Karten ersten Typs chaotische Karten des Typs "skew tent" sind und die chaotischen Karten zweiten Typs chaotische Karten lineare chaotische Karten mit PWLCM-Abschnitten sind.

8. Generator chaotischer Sequenzen nach einem der vorangehenden Ansprüche, **dadurch gekennzeichnet, dass** die Anzahl von Eingängen und von Ausgängen der Kombinationsmittel einer der folgenden Anzahlen entspricht: 4, 8, 32, 64.

9. Generator chaotischer Sequenzen nach einem der vorangehenden Ansprüche, **dadurch gekennzeichnet, dass** die Kombinationsmittel (20) für den Erhalt eines Ausgangs eine Anzahl m von Schaltern (40, 42, 44, 46) aufweisen, die am Ausgang der Mittel (4, 6, 8, 10) zur Umsetzung nichtlinearer Funktionen angeschlossen sind, wobei ein geschlossener Schalter der Anwesenheit eines Elements gleich Eins in der binären Diffusionsmatrix entspricht und ein geöffneter Schalter der Anwesenheit eines Elements gleich Null in der binären Diffusionsmatrix entspricht, wobei die Ausgänge der Schalter mit einem Port "oder exklusiv" (48) verbunden sind.

10. Verfahren zum Erzeugen chaotischer Sequenzen mit Ganzzahlwerten, dargestellt auf einer vorbestimmten Anzahl von Bits, umgesetzt von einem Generator chaotischer Sequenzen nach Anspruch 1, wobei die Sequenzen bestimmt sind, insbesondere in Systemen zur Verschlüsselung von Informationen auf Schlüsselbasis verwendet zu werden, wobei das Verfahren **dadurch gekennzeichnet ist, dass** es die folgenden Schritte aufweist:

   - Anwenden (54) von m nichtlinearen Funktionen auf m gegebene Ausgangswerte, was erlaubt, m chaotische Werte zu erhalten,
   - Kombinieren (62) der m chaotischen Werte durch Anwenden einer binären Diffusionsmatrix, was erlaubt, m kombinierte chaotische Werte zu erhalten, wobei die kombinierten Werte im Anwendungsschritt (54) als Ausgangswerte erneut bereitgestellt werden.

11. Verfahren zum Erzeugen chaotischer Sequenzen nach Anspruch 10, **dadurch gekennzeichnet, dass** es ferner einen Anwendungsschritt (66) einer Störung auf mindestens einen Unterabschnitt der m kombinierten chaotischen Werte aufweist.

**Claims**

1. A generator (2) of chaotic sequences of numbers with integer values, represented on a predetermined number of bits, said sequences being intended to be notably used in key-based information encrypting systems, said generator including a number m of means (4, 6, 8, 10) for applying non-linear functions, **characterized in that** it includes, at the output of said means (4, 6, 8, 10) for applying non-linear functions, combination means (20) capable of combining the outputs of said means (4, 6, 8, 10) for applying non-linear functions by applying a given binary scattering matrix, giving the possibility of obtaining a number m of outputs, each output value being calculated by a binary combination of outputs of said means (4, 6, 8, 10) for applying non-linear functions, the output values being again provided at the input of the means for applying non-linear functions.

2. The generator of chaotic sequences according to claim 1, **characterized in that** it further includes perturbation means (22, 24, 26, 28) connected to the output of the combination means (20).

3. The generator of chaotic sequences according to claim 2, **characterized in that** it includes m perturbation means (22, 24, 26, 28), said one perturbation means being connected to each output of the combination means (20).

4. The generator of chaotic sequences according to one of claims 2 or 3, **characterized in that** said one perturbation means (22, 24, 26, 28) comprises a reaction shift register.

5. The generator of chaotic sequences according to one of claims 1 to 4, **characterized in that** said means (4, 6, 8, 10) for applying non-linear functions, include means for applying chaotic maps of a first type and means for applying chaotic maps of a second type.

6. The generator of chaotic sequences according to claim 5, **characterized in that** the means for applying chaotic maps of a first type and the means for applying chaotic maps of a second type are alternating means.

7. The generator of chaotic sequences according to one of claims 5 or 6, **characterized in that** the chaotic maps of a first type are chaotic maps of the « skew tent » type and the chaotic maps of a second type are piecewise linear chaotic maps PWLCM.

8. The generator of chaotic sequences according to one of the preceding claims, **characterized in that** the numbers of inputs and outputs of the combination means are equal to one of the following numbers: 4, 8, 32, 64.

9. The generator of chaotic sequences according to one of the preceding claims, **characterized in that** the combination means (20) include, for obtaining an output, a number m of switches (40, 42, 44, 46) connected to the outputs of the means (4, 6, 8, 10) for applying non-linear functions, a closed switch corresponding to the presence of an element equal to one in the binary scattering matrix and an open switch corresponding to the presence of an element equal to zero in the binary scattering matrix, the outputs of said switches being connected to an « exclusive OR » gate (48).

10. A method for generating chaotic sequences of numbers with integer values represented on a predetermined number of bits, applied by a generator of chaotic sequences according to claim 1, said sequences being intended to be notably used in key-based information encrypting systems, the method being **characterized in that** it includes the steps:

   - applying (54) m non-linear functions on m given initial values, giving the possibility of obtaining m chaotic values,
   - combining (62) the m chaotic values by applying a binary scattering matrix, giving the possibility of obtaining m combined chaotic values, the combined chaotic values being again provided as initial values in the application step (54).

11. The method for generating chaotic sequences according to claim 10, **characterized in that** it further includes a step (66) for applying a perturbation on at least one sub-portion of the m combined chaotic values.

<u>FIG.1</u>

$X_1(n-1) \longrightarrow$ -4-

$X_2(n-1) \longrightarrow$ -6-

$D_{i,2}$

42

40

$X_i(n-1)$ -8-

44

$X_m(n-1)$ -10-

$D_{i,m}$

46

-26-

$X_1(n)$

48

34

# FIG.2

Conditions initiales
$\{X_1 (0),..., X_m (0)\}$
+ paramètres
+ $N_s$ — 50

$n = 1$ — 52

Appliquer Fi ($X_i$ (n–1)
i = 1,..., m — 54

Itérer Fi ( ) s fois — 56

Appliquer matrice
de diffusion sur $X'_i$ (n)
i = 1,..., m — 58

$n = n+1$

64

Appliquer
perturbation — 60

non

$n > N_s$? — 62

oui

$X_i$ (n)   n = 1,...,$N_s$
i = 1,...,m

# FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   WO 2011121218 A, Safwan El Assad et Hassan Noura

**Littérature non-brevet citée dans la description**

*   On constructing of a 32x32 binary matrix as a diffusion layer for a 256-bit block cipher. **KOO et al.** Proceedings ICISC. Springer Verlag LNCS, 2006, vol. 4296, 51-64